(19) Europäisches Patentamt
European Patent Office
Office européen des brevets

(11) **EP 1 808 226 A1**

(12) **EUROPEAN PATENT APPLICATION**

(43) Date of publication:
**18.07.2007 Bulletin 2007/29**

(51) Int Cl.:
*B01J 21/04* (2006.01)    *B01J 21/10* (2006.01)
*B01J 23/58* (2006.01)    *B01J 23/63* (2006.01)
*B01J 23/78* (2006.01)    *B01J 23/83* (2006.01)
*C01B 3/40* (2006.01)

(21) Application number: **07250126.5**

(22) Date of filing: **12.01.2007**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **16.01.2006 JP 2006007193
28.04.2006 JP 2006126266**

(71) Applicant: **TODA KOGYO CORPORATION
Hiroshima-shi,
Hiroshima-ken (JP)**

(72) Inventor: **Kobayashi, Naoya,
c/o Toda Kogyo Corporation
Ohtake-shi, Hiroshima-ken (JP)**

(74) Representative: **Woods, Geoffrey Corlett
J.A. KEMP & CO.
Gray's Inn
14 South Square
London WC1R 5JJ (GB)**

(54) **Porous carrier for steam-reforming catalysts, steam-reforming catalyst and process for producing reactive mixed gas**

(57)    A porous carrier for steam-reforming catalysts is composed of a composite oxide containing at least aluminum and magnesium, and has a BET specific surface area of 10 to 300 m2/g, an average pore diameter of not more than 300 Å and a pore volume of not less than 0.1 cm3/g. The catalyst obtained by supporting an active metal thereon, can be suitably used as a catalyst for steam-reforming a hydrocarbon raw material having a total sulfur content of not more than 50 ppm.

A carrier is thus provided which can be industrially mass-produced and can exhibit an excellent sulfur-poisoning resistance. Further, the catalyst using the porous carrier is very useful for producing a mixed gas of a $C_1$ component and hydrogen by subjecting a sulfur-containing hydrocarbon to a steam-reforming reaction.

**EP 1 808 226 A1**

**Description**

BACKGROUND OF THE INVENTION:

The present invention relates to a porous carrier for steam-reforming catalysts, a steam-reforming catalyst and a process for producing a reactive mixed gas. More particularly, the to present invention relates a porous carrier for steam-reforming catalysts which is excellent in sulfur-poisoning resistance and capable of being industrially mass-produced, a steam-reforming catalyst using the porous carrier, and a process for producing a reactive mixed gas composed of a $C_1$ component such as carbon oxide, etc. and hydrogen by subjecting sulfur-containing hydrocarbons to steam-reforming reaction in the presence of the steam-reforming catalyst.

Power generation systems using a generator in which coals or petroleum as an energy source are burned to generate an electric power, are susceptible to significant influences by disasters such as earthquake, increase in price of raw materials, and terrorism and wars. Therefore, it has been strongly demanded that the conventional power generation systems are rapidly replaced with alternate systems by the use of a variety of energy sources and the dispersion of electric power sources.

Also, cogeneration systems capable of generating an electric power in situ according to requirements, exhibit a higher energy efficiency and undergo a less generation of unsuitable gases such as carbon dioxide as compared to ordinary power generation systems in which an electric energy generated at a power plant is distributed to respective homes and offices through transmission lines and electric wires. For this reason, the cogeneration systems have been largely expected from the standpoints of global environments and exhaust of natural sources. Among these systems, fuel cell power generation systems utilizing hydrogen are most expected and have now been put into practice.

As a hydrogen-generating fuel source used in the fuel cell, there have been studied various extensive hydrocarbon-based raw materials, for example, petroleum-based raw materials such as kerosene, isooctane and gasoline, LP gases, city gases, etc.

However, the petroleum-based raw materials or the LP gases contain sulfur by themselves, and the city gases contain sulfur which is subsequently added thereto, in a total amount of about 10 ppm to about 100 ppm or more.

Upon reforming these hydrocarbon-based raw materials into a hydrogen-rich mixed gas, if a large amount of sulfur is present in the hydrocarbon-based raw materials, a catalyst of a reformer used in the fuel cell systems tends to be poisoned with the sulfur, resulting in deteriorated catalytic activity thereof. For this reason, it is required to use a large amount of a desulfurization catalyst or dispose an expensive desulfurization system on an upstream side of the fuel cell systems. As a result, total costs for the systems tend to be considerably increased, resulting in inhibiting wide spread of the fuel cell systems.

To solve the above problems, as one of methods for reducing the costs, there have been studied catalysts having a high sulfur-poisoning resistance. For example, as the method of imparting a sulfur-poisoning resistance to catalytically active metals themselves, there has been proposed a method of improving a carrier supporting the catalytically active metals (Japanese Patent Application Laid-open (KOKAI) Nos. 9-173842(1997), 2001-340759, 2004-900 and 2004-82034). Also, as the catalyst for steam reforming of hydrocarbons, there are known catalysts containing magnesium and aluminum (Japanese Patent Application Laid-open (KOKAI) Nos. 55-139836(1980) and 2003-225566).

However, in the techniques described in Japanese Patent Application Laid-open (KOKAI) Nos. 9-173842(1997), 2001-340759, 2004-900 and 2004-82034, the catalysts are improved in sulfur-poisoning resistance as compared to those of the conventional catalysts, but have failed to exhibit a fully satisfactory sulfur-poisoning resistance. Also, in the techniques described in Japanese Patent Application Laid-open (KOKAI) Nos. 55-139836(1980) and 2003-225566, no sulfur-poisoning resistance of the catalysts is taken into consideration.

In addition, in the above conventional techniques, since the steam-reforming reaction for obtaining hydrogen is conducted at a high temperature such as 600°C or higher, the sintering of main components of the carrier such as aluminum and zirconium tends to be promoted during the steam-reforming reaction. For this reason, the carrier itself tends to suffer from decrease in pores and specific surface area, resulting in not only deteriorated activity of active metals supported thereon, but also promotion of sintering of the active metals at the same time. As a result, the catalyst tends to suffer from accelerated deterioration in its catalytic activity, thereby causing a significant problem concerning durability of the catalyst.

That is, at the present time, although it has been demanded to provide a porous carrier for steam-reforming catalysts which can impart a high sulfur-poisoning resistance to a catalyst component, the conventional porous carriers have failed to exhibit sufficient effects, performances and durability.

The present invention has been conducted in view of the above conventional problems, and as a result of the present inventors' earnest study for solving the above problems, it has been found that a porous carrier having limited specific surface area as well as specific average pore diameter and pore volume is not only excellent in sulfur-poisoning resistance, but also can be industrially mass-produced and, therefore, is suitable as a porous carrier for steam-reforming catalysts. The present invention has been attained on the basis of the above finding.

SUMMARY OF THE INVENTION

An object of the present invention is to provide a porous carrier for steam-reforming catalysts which can be prevented from suffering from sintering of the porous carrier itself and active metals supported thereon, and can maintain a high catalytic activity and an excellent sulfur-poisoning resistance for a long period of time.

Another object of the present invention is to provide a steam-reforming catalyst which can be prevented from suffering from sintering of a porous carrier and active metals supported thereon, and can maintain not only a high catalytic activity but also an excellent sulfur-poisoning resistance for a long period of time.

A further object of the present invention is to provide a process for producing a mixed gas of a $C_1$ component such as carbon oxide, etc. and hydrogen even from a hydrocarbon raw material containing sulfur.

To accomplish the aims, in a first aspect of the present invention, there is provided a porous carrier for steam-reforming catalysts, comprising a composite oxide containing at least aluminum and magnesium, and having a BET specific surface area of 10 to 300 $m^2/g$, an average pore diameter of not more than 300 Å and a pore volume of not less than 0.1 $cm^3/g$.

In a second aspect of the present invention, there is provided a steam-reforming catalyst comprising the porous carrier as defined in the above first aspect, and at least one active metal selected from the group consisting of Ru, Rh, Ir, Pt, Pd, Co, Ni, Fe and Ag, which is supported on the porous carrier and has an average particle diameter of 1 to 15 nm.

In a third aspect of the present invention, there is provided a process for producing a reactive mixed gas containing a $C_1$ component such as carbon oxide, etc. and hydrogen, comprising the step of contacting a gaseous or liquid hydrocarbon raw material with the steam-reforming catalyst as defined in the above second aspect to decompose the hydrocarbon raw material.

DETAILED DESCRIPTION OF THE INVENTION

The present invention is described in detail below.

First, the porous carrier for steam-reforming catalysts according to the present invention is described.

The porous carrier for steam-reforming catalysts according to the first aspect of the present invention is composed of a composite oxide containing at least aluminum and magnesium, and has a BET specific surface area of 10 to 300 $m^2/g$, an average pore diameter of not more than 300 Å and a pore volume of not less than 0.1 $cm^3/g$.

The BET specific surface area of the porous carrier is usually 10 to 300 $m^2/g$, preferably 20 to 280 $m^2/g$, more preferably 23 to 270 $m^2/g$. When the BET specific surface area of the porous carrier is less than 10 $m^2/g$, the obtained carrier tends to have a too large average pore diameter, so that it may be difficult to sufficiently prevent sintering of active metals to be supported thereon. The porous carrier having a BET specific surface area of more than 300 $m^2/g$ may be difficult to industrially produce.

The average pore diameter of the porous carrier is usually not more than 300 Å, preferably not more than 290 Å, more preferably not more than 280 Å. When the average pore diameter of the porous carrier is more than 300 Å, it may be difficult to not only sufficiently prevent sintering of the active metals, but also fully exhibit a sulfur-poisoning resistance. The lower limit thereof is preferably about 10 Å.

The pore volume of the porous carrier is usually not less than 0.1 $cm^3/g$, preferably 0.12 $cm^3/g$. When the pore volume of the porous carrier is less than 0.1 $cm^3/g$, it may be difficult to fully exhibit a sulfur-poisoning resistance and the resultant catalyst may fail to attain a sufficient catalytic activity. The upper limit thereof is preferably about 5 $cm^3/g$.

The porous carrier may be in the form of a powder, particles, a beads-like molded product or sheet-like molded product.

The porous carrier in the form of the molded product has a BET specific surface area of usually 10 to 100 $m^2/g$, preferably 10 to 98 $m^2/g$, more preferably 11 to 95 $m^2/g$. When the BET specific surface area of the molded porous carrier is less than 10 $m^2/g$, the resultant catalyst tends to be deteriorated in catalytic activity, and it may be difficult to exhibit an excellent sulfur-poisoning resistance. The molded porous carrier having a BET specific surface area of more than 100 $m^2/g$ tends to be deteriorated in molding strength.

The porous carrier in the form of the molded product has an average pore diameter of usually not more than 250 Å, preferably not more than 245 Å, more preferably not more than 240 Å. When the average pore diameter of the molded porous carrier is more than 250 Å, it may be difficult to sufficiently prevent sintering of the active metals supported thereon. The lower limit thereof is preferably about 10 Å.

The porous carrier in the form of the molded product has a pore volume of usually not less than 0.1 $cm^3/g$, preferably not less than 0.12 $cm^3/g$. When the pore volume of the molded porous carrier is less than 0.1 $cm^3/g$, it may be difficult to fully exhibit a sulfur-poisoning resistance and the resultant catalyst may fail to exhibit a sufficient catalytic activity. The upper limit thereof is preferably about 5 $cm^3/g$.

The porous carrier in the form of a beads-like molded product or a sheet-like molded product may be made of the above porous carrier solely, or may be obtained by applying the porous material onto a base material such as cordierite and alumina, which is formed into suitable size, configuration and shape.

The content of magnesium in the composite oxide constituting the porous carrier of the present invention is usually 22 to 60% by weight, preferably 23 to 55% by weight (calculated as Mg) based on the weight of the porous carrier, and the content of aluminum in the composite oxide constituting the porous carrier of the present invention is usually 5 to 30% by weight, preferably 7.5 to 25% by weight (calculated as Al) based on the weight of the porous carrier, wherein when the porous carrier is in the form of a molded product, the weight of the base material such as cordierite and alumina is excluded therefrom. When the content of magnesium in the porous carrier is less than 22% by weight, it may be difficult to exhibit a sufficient sulfur-poisoning resistance. When the content of magnesium in the porous carrier is more than 60% by weight, it may be difficult to further improve the effect of imparting the sulfur-poisoning resistance even by adding such a large amount of magnesium thereto.

The molar ratio of magnesium element to aluminum element (Mg:Al) contained in the composite oxide constituting the porous carrier of the present invention is usually 1.2 : 1 to 5 : 1, preferably 1.5 : 1 to 4.8 : 1.

In the present invention, the composite oxide itself forming the above porous carrier or the molded product thereof may also contain at least one selected from the group consisting of an oxide, a hydroxide, a carbonate or an oxide hydroxide of at least one element selected from the group consisting of rare earth elements, elements of Group Ia and elements of Group IIa, which include silicon, zirconium, cerium, titanium, aluminum, yttrium, scandium, etc.

Specific examples of the oxide, hydroxide, carbonate or oxide hydroxide of the above elements may include silica, zirconia, ceria, titania, water glass, yttria, scandia, potassium carbonate, calcia, lanthanum oxide, neodymium oxide, cerium oxide, rubidium hydroxide, barium carbonate, boehmite, $\alpha$-alumina, $\theta$-alumina and $\gamma$-alumina. These compounds may be used alone or in the form of a mixture of any two or more thereof. Among these compounds, preferred are silica, ceria, water glass, boehmite, $\theta$-alumina.

Meanwhile, the particle shape of the oxide, hydroxide, carbonate or oxide hydroxide of the above elements may be of any shape such as a granular shape, a fiber shape, an acicular shape and a spindle shape.

The content of magnesium in the mixture comprising the composite oxide and at least one selected from the group consisting of an oxide, a hydroxide, a carbonate and an oxide hydroxide of the above elements is usually 20.0 to 50.0% by weight, preferably 21.0 to 49.0% by weight, more preferably 22.0 to 48.0% by weight (calculated as Mg) based on the weight of the mixture, wherein when the porous carrier is in the form of a molded product, the weight of the base material such as cordierite and alumina is excluded therefrom. When the content of magnesium in the mixture is less than 20.0% by weight, it may be difficult to exhibit a sufficient sulfur-poisoning resistance. When the content of magnesium in the mixture is more than 50.0% by weight, it may be difficult to further improve the effect of imparting the sulfur-poisoning resistance even by adding such a large amount of magnesium to the mixture.

The content of aluminum in the mixture comprising the composite oxide and at least one selected from the group consisting of an oxide, a hydroxide, a carbonate and an oxide hydroxide of the above elements is usually 3 to 30% by weight and preferably 4 to 28% by weight (calculated as Al) based on the weight of the mixture.

Next, the steam-reforming catalyst according to the second aspect of the present invention is described. The steam-reforming catalyst is composed of the porous carrier according to the first aspect of the present invention, and at least one active metal selected from the group consisting of Ru, Rh, Ir, Pt, Pd, Co, Ni, Fe and Ag, which is supported on the porous carrier and has an average particle diameter of 1 to 15 nm. The steam-reforming catalyst of the present invention can exhibit and maintain a high catalytic activity for a long period of time.

As the active metal, there may be used at least one metal selected from the group consisting of Ru, Rh, Ir, Pt, Pd, Co, Ni, Fe and Ag. Among these metals, preferred are Ru, Ni, Pd, Co, Pt, and Ag.

The average particle diameter of the active metal is usually 1 to 20 nm, preferably 1.5 to 15 nm. When the average particle diameter of the active metal is more than 20 nm, the resultant catalyst tends to be deteriorated in catalytic activity or suffer from coking.

The amount of the active metal supported on the porous carrier is usually 0.1 to 40% by weight, preferably 0.5 to 30% by weight based on the weight of the steam-reforming catalyst.

Next, the process for producing the porous carrier of the present invention is described.

The porous carrier of the present invention may be produced by mixing at least an aluminum raw material and a magnesium raw material with each other in a solution to prepare a mixed solution thereof, adjusting a pH value of the mixed solution to not less than 8 to precipitate a composite hydroxide thereof, and then subjecting the thus obtained composite hydroxide or a mixture of the composite hydroxide with an aluminum compound and/or a magnesium compound, to heat treatment at a temperature of usually 350 to 1,250°C.

Examples of the aluminum raw material may include sulfates, nitrates, chlorides, hydroxides, oxides, oxyhydroxides, alkoxide compounds and citric acid complexes of aluminum.

Examples of the magnesium raw material may include sulfates, nitrates, chlorides, hydroxides, oxides, carbonates, alkoxide compounds and citric acid complexes of magnesium.

The pH value of the mixed solution is adjusted to usually not less than 8 and preferably 8.5 to 14. In order to adjust the pH value of the mixed solution to not less than 8, ammonia or urea, or a hydroxide, a carbonate or an oxide of an alkali metal element or an alkali earth metal element such as magnesium, potassium and sodium, may be added to the mixed solution.

The temperature used for precipitating the composite hydroxide is usually 10 to 300°C, preferably 15 to 280°C, more preferably 20 to 250°C. When the precipitating temperature is more than 300°C, it may be difficult to industrially produce the composite hydroxide. When the precipitating temperature is less than 10°C, the precipitation procedure tends to require a special cooling apparatus, resulting in increased costs.

The heat-treating temperature is usually 350 to 1,250°C, preferably 370 to 1,230°C, more preferably 400 to 1,210°C. When the heat-treating temperature is more than 1,250°C, the resultant porous carrier tends to suffer from increase in pore diameter and reduction in both pore volume and BET specific surface area, resulting in deteriorated catalytic activity as well as poor effect of imparting the sulfur-poisoning resistance. When the heat-treating temperature is less than 350°C, it may be difficult to produce a carrier having a porous structure.

Meanwhile, the molded product of the porous carrier may be produced by an ordinary method. For example, there may be used a method of coating the porous carrier on a cordierite honeycomb, an aluminum plate or a stainless steel-based metal plate, or a method of forming the porous carrier into a beads-like molded product using a compression molding apparatus or an extrusion molding apparatus.

In addition, the mixture containing the porous carrier may be formed by mixing the porous carrier or the molded product thereof with at least one selected from the group consisting of an oxide, a hydroxide, a carbonate or an oxide hydroxide of the above elements, for example, silica, boehmite, etc., according to an ordinary method. Also, after mixing the porous carrier with mixture comprising the composite oxide and at least one selected from the group consisting of an oxide, a hydroxide, a carbonate or an oxide hydroxide of the above elements, for example, silica, boehmite, etc., the resultant mixture may be formed into a molded product.

In the mixture of the present invention, an amount of at least one selected from the group consisting of the oxide, hydroxide, carbonate or oxide hydroxide of at least one element selected from the group consisting of rare earth elements, elements of Group Ia and elements of Group IIa, which include silicon, zirconium, cerium, titanium, aluminum, yttrium and scandium, is usually 0.1 to 30% by weight, preferably 0.5 to 28% by weight based on the weight of the porous carrier. Further, the content of magnesium in the thus obtained mixture is usually 20 to 50% by weight (calculated as Mg).

The steam-reforming catalyst of the present invention may be produced by supporting an active metal on the above porous carrier or the mixture thereof. The active metal may be supported on the porous carrier or the mixture thereof by an ordinary method.

For example, as the method of supporting the active metal on the porous carrier or the mixture thereof, there may be used a method of immersing the porous carrier in an aqueous solution containing a salt of the active metal as required to impregnate the active metal into the porous carrier, and then drying and heat-treating the porous carrier impregnated with the active metal; a method of coating the porous carrier on which the active metal is supported, onto a cordierite honeycomb, an alumina plate or a stainless steel-based metal plate; a method of forming the porous carrier on which the active metal is supported, into a beads-like molded product using a compression molding apparatus or an extrusion molding apparatus, etc.

Next, the process for producing a reactive mixed gas using the steam-reforming catalyst according to the third aspect of the present invention is described. In the process for producing a reactive mixed gas according to the third aspect of the present invention, a gaseous or liquid hydrocarbon raw material and steam are contacted with the steam-reforming catalyst according to the second aspect of the present invention to decompose the hydrocarbon raw material, thereby obtaining a reactive mixed gas containing a $C_1$ component such as carbon oxide and carbon dioxide, and hydrogen as main components.

In the process for producing a reactive mixed gas by contacting the hydrocarbon raw material with the steam-reforming catalyst while feeding steam according to the present invention, when using the gaseous hydrocarbon raw material having a total sulfur content of not more than 50 ppm, the step of obtaining the reactive mixed gas containing a $C_1$ component such as carbon oxide and carbon dioxide, and hydrogen as main components by contacting the gaseous hydrocarbon raw material and steam with the steam-reforming catalyst may be conducted at a gas hourly space velocity (GHSV) of usually 100 to 1,000,000 $h^{-1}$, preferably 150 to 800,000 $h^{-1}$, more preferably 200 to 500,000 $h^{-1}$ and a reaction temperature of usually 300 to 800°C, preferably 300 to 780°C, more preferably 320 to 750°C, under such a condition of a ratio of steam to carbon of the gaseous hydrocarbon raw material (S/C) of usually 1.0 to 6.0, preferably 1.5 to 4.0.

Examples of the gaseous hydrocarbon raw material may include extensive hydrocarbon compounds such as methane, ethane, gasified propane, gasified isooctane, gasified kerosene and gasified gasoline.

Examples of sulfur-containing compounds contained in the hydrocarbon raw material may include methyl mercaptan, ethyl mercaptan, isobutyl mercaptan, methylethyl sulfide, dimethyl sulfide, tert-butyl mercaptan, sec-butyl mercaptan, n-butyl mercaptan, isopropyl mercaptan, n-propyl mercaptan, isoamyl mercaptan, n-amyl mercaptan, α-methylbutyl mercaptan, α-ethylpropyl mercaptan, n-hexyl mercaptan, 2-mercaptohexane and 3-mercaptohexane.

When the gas hourly space velocity (GHSV) of the gaseous hydrocarbon raw material and steam fed is less than 100 $h^{-1}$, the amounts of the $C_1$ component and hydrogen produced are too small, resulting in unpractical process.

When the gas hourly space velocity (GHSV) of the gaseous hydrocarbon raw material and steam fed is more than 1,000,000 $h^{-1}$, it may be difficult to provide a heat source capable of generating a sufficient amount of heat required for the endothermic reaction.

When the reaction temperature is less than 300°C, the gaseous hydrocarbon raw material tends to undergo substantially no conversion into the $C_1$ component and hydrogen, resulting in unsuitable process. When the reaction temperature is more than 800°C, it is required to use an expensive material such as Inconel as a material of a reaction vessel used therein.

When the ratio of steam to carbon (S/C) is less than 1.0, decomposition of the resultant hydrocarbon itself tends to proceed, resulting in considerably accelerated coking and considerable carbon precipitation. When the ratio of steam to carbon (S/C) is more than 6.0, the yield of the obtained $C_1$ component and hydrogen tends to be too low.

In the process for producing a reactive mixed gas by contacting the hydrocarbon raw material with the steam-reforming catalyst while feeding steam according to the present invention, when using the liquid hydrocarbon raw material having a total sulfur content of usually not more than 50 ppm, the step of obtaining the reactive mixed gas containing a $C_1$ component such as carbon oxide and carbon dioxide, and hydrogen as main components by contacting the liquid hydrocarbon raw material and steam with the steam-reforming catalyst may be conducted at a liquid hourly space velocity (LHSV) of usually not more than 5 $h^{-1}$, preferably 1 to 4 $h^{-1}$ and a reaction temperature of usually 300 to 800°C, preferably 310 to 800°C, more preferably 320 to 800°C, under such a condition of a ratio of steam to carbon (S/C) of usually 1.0 to 6.0, preferably 1.5 to 5.5.

Examples of the liquid hydrocarbon raw material may include extensive hydrocarbon compounds such as propane, isooctane, kerosine and gasoline.

Examples of sulfur-containing compounds contained in the liquid hydrocarbon raw material may include methyl mercaptan, ethyl mercaptan, isobutyl mercaptan, methylethyl sulfide, dimethyl sulfide, tert-butyl mercaptan, sec-butyl mercaptan, n-butyl mercaptan, isopropyl mercaptan, n-propyl mercaptan, isoamyl mercaptan, n-amyl mercaptan, $\alpha$-methylbutyl mercaptan, $\alpha$-ethylpropyl mercaptan, n-hexyl mercaptan, 2-mercaptohexane and 3-mercaptohexane.

When the liquid hourly space velocity (LHSV) of the liquid hydrocarbon raw material is more than 5 $h^{-1}$, the hydrocarbon raw material may fail to fully contact with the active metal.

When the reaction temperature is less than 300°C, the liquid hydrocarbon raw material tends to undergo substantially no conversion into the $C_1$ component and hydrogen, resulting in unsuitable process. When the reaction temperature is more than 800°C, it is required to use an expensive material such as Inconel as a material of a reaction vessel used therein.

When the ratio of steam to carbon (S/C) is less than 1.0, decomposition of the resultant hydrocarbon itself tends to proceed, resulting in considerably accelerated coking and carbon precipitation. When the ratio of steam to carbon (S/C) is more than 6.0, the yield of the obtained $C_1$ component and hydrogen tends to be too low.

The reason why the porous carrier for catalysts for steam-reforming a hydrocarbon raw material according to the present invention can exhibit an excellent sulfur-poisoning resistance, is considered as follows, though it is not clearly determined.

That is, since the porous carrier of the present invention contains a sufficient amount of magnesium, a sulfur compound which tends to be bonded to an active metal supported thereon is first captured and adsorbed by the magnesium. Although a large amount of the sulfur compound adsorbed on the magnesium is held thereon, aluminum coexisting with the magnesium allows a part of the sulfur compound to be released from the magnesium, so that magnesium is always present on the porous carrier in an amount required for adsorbing the sulfur compound. In addition, it is considered by the present inventors that since the porous carrier has adequate BET specific surface area, average pore diameter and pore volume, the resultant catalyst can maintain a high catalytic activity for a long period of time.

Therefore, when decomposing a hydrocarbon raw material using the steam-reforming catalyst of the present invention, it is possible to readily produce a reactive mixed gas containing a $C_1$ component and hydrogen without requiring a step of reducing a sulfur content in the hydrocarbon raw material.

The porous carrier and the steam-reforming catalyst according to the present invention can be prevented from suffering from sintering of the porous carrier and the active metal supported thereon, and can maintain not only a high catalytic activity but also an excellent sulfur-poisoning resistance for a long period of time.

Accordingly, in the present invention, even a hydrocarbon raw material containing a small amount of sulfur can be efficiently decomposed by steam-reforming reaction thereof to produce a mixed gas containing a $C_1$ component and hydrogen.

Thus, in accordance with the present invention, there is provided an excellent porous carrier capable of being industrially mass-produced and exhibiting an excellent sulfur-poisoning resistance, and the catalyst using the porous carrier is very useful for decomposing a sulfur-containing hydrocarbon by steam-reforming reaction thereof to produce a mixed gas containing a $C_1$ component and hydrogen.

EXAMPLES

The present invention is described in more detail below by Examples. However, the Examples are only illustrative and not intended to limit the scope of the present invention.

(1) The BET specific surface area value was measured by a B. E. T. method using nitrogen.
(2) The size of the active metal supported on the carrier was measured by a transmission electron microscope "JEM-1200EXII" manufactured by Nippon Denshi Co., Ltd.
(3) The contents of magnesium, aluminum and the active metal were determined by dissolving a sample in an acid and analyzing the content of each component in the obtained solution by using a plasma emission spectroscopic device "SPS-4000" manufactured by Seiko Denshi Kogyo Co., Ltd.
(4) The pore diameter and the pore volume were determined by preparing a nitrogen adsorption isothermal chart at 75 K using a high-speed specific surface area/pore distribution measuring apparatus "ASAP2010" manufactured by Micromeritics Corp., and then preparing a pore distribution curve from the isothermal chart by BJH method.
(5) The steam-reforming reaction was conducted using a laboratory single-tube fixed bed flow-type reactor.

Although a commercially available apparatus may be used as the reactor, in the present invention, a self-made apparatus was used for studying the steam-reforming reaction. The components obtained after the steam-reforming reaction were analyzed by a gas chromatograph.

Example 1:

<Production of porous carrier>

73.3 g of $Mg(NO_3)_2 \cdot 6H_2O$ and 42.9 g of $Al(NO_3)_3 \cdot 9H_2O$ were dissolved in water to prepare 600 mL of a solution thereof. Separately, 60 mL of a NaOH solution (concentration: 14 mol/L) was added to a solution in which 14.5 g of $Na_2CO_3$ was dissolved, to prepare 400 mL of a mixed alkali solution. The previously prepared mixed solution containing the magnesium salt and the aluminum salt was added to the mixed alkali solution, and the resultant mixed solution was aged at 90°C for 5.5 hours, thereby obtaining a composite hydroxide. The thus obtained reaction solution containing the composite hydroxide was filtered to separate the composite hydroxide therefrom, and the thus separated composite hydroxide was dried, pulverized and then heat-treated at 480°C for 20 hours.
As a result of analyzing the obtained porous carrier, it was confirmed that the obtained porous carrier had a BET specific surface area of 80.0 $m^2/g$, an average pore diameter of 237 Å and a pore volume of 0.58 $cm^3/g$

<Production of catalyst and evaluation of catalytic activity thereof>

The resultant carrier component was mixed with acicular boehmite in an amount corresponding to 8.5% by weight based on the weight of the carrier. The resultant mixture was molded into a spherical shape having a diameter of 3 mm. As a result of analyzing the spherical molded product, it was confirmed that the content of Mg in the spherical molded product was 32.5% by weight. The obtained spherical molded product was impregnated with nickel nitrate such that metallic nickel as a catalyst component was contained therein in an amount of 27% by weight. After drying, the resultant product was heat-treated at 700°C for 1 hour. The thus heat-treated product was subjected to reducing treatment at 780°C for 2 hours in a gas containing 5% by volume of hydrogen and nitrogen to precipitate and immobilize the metallic nickel on the carrier, thereby obtaining a catalyst. As a result of analyzing the obtained catalyst, it was confirmed that the amount of the metallic nickel supported on the carrier was 26.9% by weight, and the size of the metallic nickel supported on the carrier was 8 nm. Further, it was confirmed that the magnesium content in the resultant porous carrier was 23.6% by weight and the aluminum content was 13.6% by weight (molar ratio: Mg:Al = 1.9 :1).
6 cc (6.63 g) of the thus obtained catalyst was filled in a flow reaction apparatus, and a city gas 13A having a total sulfur content of 5 ppm was flowed therethrough at a gas hourly space velocity (GHSV) of 500 h$^{-1}$ and a temperature of 430°C, while feeding steam under the condition of a ratio of steam to carbon (S/C) of 2, to evaluate a steam reforming activity of the catalyst. As a result, it was confirmed that even after the reaction was conducted for 25 hours, only a $C_1$ component of carbon oxide and carbon dioxide, and hydrogen were produced as reaction products, and no gas components containing $C_2$ or more hydrocarbons were detected.

Example 2:

The same procedure as defined in Example 1 was conducted except that 63.1 g of $Mg(NO_3)_2 \cdot 6H_2O$, 57.7 g of $Al(NO_3)_3 \cdot 9H_2O$, 60 mL of a NaOH solution (concentration: 14 mol/L) and 19.6 of $Na_2CO_3$ were used as raw compounds, and the reaction therebetween was conducted at 50°C for 3 hours. The resultant composite hydroxide was heat-treated at 950°C for 1 hour.

As a result, it was confirmed that the obtained catalyst carrier had a BET specific surface area of 268 $m^2/g$, an average pore diameter of 292 Å and a pore volume of 3.69 $cm^3/g$.

The resultant carrier component was mixed with titania in an amount corresponding to 18.9% by weight based on the weight of the carrier. The resultant mixture was molded into a disk shape having a diameter of 10 mm, and the obtained disk-shaped molded product was pulverized and classified to obtain pulverized pellets having a size of 1 to 1.5 mm. As a result of analyzing the pellets, it was confirmed that the content of Mg in the pellets was 22.2% by weight. The obtained pellets were heat-treated at 500°C for 2 hours, and further immersed in a rhodium nitrate solution and then dried to produce a catalyst precursor containing metallic rhodium as a catalyst component in an amount of 1.5% by weight. Next, the resultant catalyst precursor was dried and then heat-treated at 450°C for 1 hour. Further, the thus obtained product was subjected to hydrogen reducing treatment at 500°C for 1 hour in a gas containing 5% by volume of hydrogen and nitrogen, thereby obtaining a catalyst. As a result of analyzing the obtained catalyst, it was confirmed that the amount of metallic rhodium supported on the catalyst was 1.50% by weight, and the size of the metallic rhodium supported on the catalyst was 3 nm. Further, it was confirmed that the magnesium content in the resultant porous carrier was 21.1% by weight and the aluminum content was 14.6% by weight (molar ratio: Mg:Al = 1.6:1).

3 cc (7.02 g) of the thus obtained catalyst was filled in a flow reaction apparatus, and gasified isooctane as a raw material having total sulfur content of 30 ppm was flowed therethrough at a gas hourly space velocity (GHSV) of 20000 $h^{-1}$ and a temperature of 550°C, while feeding steam under the condition of a ratio of steam to carbon (S/C) of 2.4, to evaluate a steam reforming activity of the catalyst. As a result, it was confirmed that even after the reaction was conducted for 7 hours, only a $C_1$ component of carbon oxide and carbon dioxide, and hydrogen were produced as reaction products, and no gas components containing $C_2$ or more hydrocarbons were detected.

Example 3:

The same procedure as defined in Example 1 was conducted except that 83.2 g of $Mg(NO_3)_2 \cdot 6H_2O$, 28.3 g of $Al(NO_3)_3 \cdot 9H_2O$, 58 mL of a NaOH solution (concentration: 14 mol/L) and 9.6 g of $Na_2CO_3$ were used as raw compounds, and the reaction therebetween was conducted at 85°C for 12 hours, followed by heat-treating the reaction product at 115°C for 1 hour.

As a result, it was confirmed that the obtained catalyst carrier had a BET specific surface area of 32 $m^2/g$, an average pore diameter of 256 Å and a pore volume of 0.28 $cm^3/g$.

The resultant carrier component was mixed with a zirconia sol such that zirconia was added in an amount corresponding to 3.2% by weight based on the weight of the carrier. The resultant mixture was compression-molded into a cylindrical shape having a diameter of 2 mm and a height of 3 mm. As a result of analyzing the cylindrical molded product, it was confirmed that the content of Mg in the cylindrical molded product was 42.8% by weight. The obtained cylindrical molded product was immersed in a ruthenium nitrate solution and then dried to produce a catalyst precursor containing metallic ruthenium as a catalyst component in an amount of 3% by weight. Next, the resultant catalyst precursor was dried and then heat-treated at 450°C for 1 hour. Further, the thus obtained product was subjected to hydrogen reducing treatment at 500°C for 1 hour in a gas containing 5% by volume of hydrogen and nitrogen, thereby obtaining a catalyst. As a result of analyzing the obtained catalyst, it was confirmed that the amount of metallic ruthenium supported on the carrier was 2.9% by weight, and the size of the metallic ruthenium supported on the carrier was 6 nm. Further, it was confirmed that the magnesium content in the resultant porous carrier was 41.5% by weight and the aluminum content was 10.7% by weight (molar ratio: Mg:Al = 4.3 :1).

10 cc (8.99 g) of the thus obtained catalyst was filled in a flow reaction apparatus, and kerosene having a total sulfur content of 8 ppm was flowed therethrough at a liquid hourly space velocity (LHSV) of 2 $h^{-1}$ and a temperature of 800°C, while feeding steam under the condition of a ratio of steam to carbon (S/C) of 3, to evaluate a steam reforming activity of the catalyst. As a result, it was confirmed that even after the reaction was conducted for 3 hours, a mixed gas containing a $C_1$ component of carbon oxide and carbon dioxide, and hydrogen as main components was produced as a reaction product, and conversion of the kerosene after conducting the reaction for 3 hours was 98.8%.

Meanwhile, assuming that the kerosene to be treated had an average molecular formula: $C_6H_{14}$, the conversion of the kerosene was determined from the following formula:

Conversion of kerosene (%) =

[1 - (total number of hydrocarbon molecules in produced

gas)/(total number of hydrocarbon molecules in kerosene

supplied)] x 100

Example 4:

The same procedure as defined in Example 1 was conducted except that 75.3 g of $Mg(NO_3)_2 \cdot 6H_2O$, 28.3 g of $Al(NO_3)_3 \cdot 9H_2O$, 9.0 g of $Ni(NO_3)_2 \cdot 6H_2O$, 58 mL of a NaOH solution (concentration: 14 mol/L) and 9.6 of $Na_2CO_3$ were used as raw compounds, and the reaction therebetween was conducted at 80°C for 6 hours, followed by heat-treating the obtained reaction product at 700°C for 2 hours.

As a result, it was confirmed that the obtained catalyst carrier had a BET specific surface area of 177 $m^2$/g, an average pore diameter of 278 Å and a pore volume of 1.34 $cm^3$/g.

The resultant carrier component was mixed with granular θ-alumina in an amount corresponding to 2.0% by weight based on the weight of the carrier. The resultant mixture was molded into a spherical shape having a diameter of 3 mm, and the obtained spherical molded product was heat-treated at 900°C for 5 hours. As a result of analyzing the heat-treated spherical molded product, it was confirmed that the content of Mg in the spherical molded product was 39.3% by weight. Further, the thus obtained spherical molded product was subjected to reducing treatment at 820°C for 1 hour in a gas containing 5% by volume of hydrogen and nitrogen to precipitate and immobilize metallic nickel on the carrier, thereby obtaining a catalyst. As a result of analyzing the obtained catalyst, it was confirmed that the amount of the metallic nickel supported on the carrier was 9.2% by weight, and the size of the metallic nickel supported on the carrier was 9 nm. Further, it was confirmed that the magnesium content in the resultant porous carrier was 35.4% by weight and the aluminum content was 12.1% by weight (molar ratio: Mg:Al = 3.3:1).

4 cc (4.88 g) of the thus obtained catalyst was filled in a flow reaction apparatus, and propane having a total sulfur content of 6 ppm was flowed therethrough at a gas hourly space velocity (GHSV) of 4000 $h^{-1}$ and a temperature of 650°C, while feeding steam under the condition of a ratio of steam to carbon (S/C) of 3, to evaluate a steam reforming activity of the catalyst. As a result, it was confirmed that even after the reaction was conducted for 10 hours, only a $C_1$ component of carbon oxide and carbon dioxide, and hydrogen were produced as reaction products, and no gas components containing $C_2$ or more hydrocarbons were detected.

Example 5:

The same procedure as defined in Example 1 was conducted except that 70.5 g of $Mg(NO_3)_2 \cdot 6H_2O$, 46.9 g of $Al(NO_3)_3 \cdot 9H_2O$, 59 mL of a NaOH solution (concentration: 14 mol/L) and 15.9 g of $Na_2CO_3$ were used as raw compounds, and the reaction therebetween was conducted at 105°C for 4.5 hours, followed by heat-treating the obtained reaction product at 550°C for 1 hour.

As a result, it was confirmed that the obtained catalyst carrier had a BET specific surface area of 74 $m^2$/g, an average pore diameter of 246 Å and a pore volume of 0.54 $cm^3$/g.

The resultant carrier component was mixed with γ-alumina in an amount corresponding to 6.8% by weight based on the weight of the carrier. The resultant mixture was molded into a spherical shape having a diameter of 3 mm, and the obtained spherical molded product was heat-treated at 550°C for 20 hours. As a result of analyzing the heat-treated spherical molded product, it was confirmed that the content of Mg in the spherical molded product was 30.7% by weight. The obtained spherical molded product was impregnated with nickel nitrate and cobalt acetate such that metallic nickel and metallic cobalt as catalyst components were contained therein in amounts of 10% by weight and 5% by weight, respectively. After drying, the obtained product was heat-treated at 900°C for 0.5 hours. Further, the thus obtained product was subjected to reducing treatment at 800°C for 1 hour in a gas containing 5% by volume of hydrogen and nitrogen to precipitate and immobilize the metallic nickel and metallic cobalt on the carrier, thereby obtaining a catalyst. As a result of analyzing the obtained catalyst, it was confirmed that the amounts of the metallic nickel and metallic cobalt supported on the carrier was 9.3% by weight and 4.5% by weight, respectively, and the size of the metallic nickel and the size of the metallic cobalt supported on the carrier were both 14 nm. Further, it was confirmed that the magnesium content in the resultant porous carrier was 26.0% by weight and the aluminum content was 16.2% by weight (molar ratio: Mg:Al = 1.8:1).

3 cc (3.60 g) of the thus obtained catalyst was filled in a flow reaction apparatus, and a city gas 13A having a total sulfur content of 4 ppm was flowed therethrough at a gas hourly space velocity (GHSV) of 12000 h$^{-1}$ and a temperature of 700°C, while feeding steam under the condition of a ratio of steam to carbon (S/C) of 2.8, to evaluate a steam reforming activity of the catalyst. As a result, it was confirmed that even after the reaction was conducted for 20 hours, only a C$_1$ component of carbon oxide and carbon dioxide, and hydrogen were produced as reaction products, and no gas components containing C$_2$ or more hydrocarbons were detected.

Example 6:

The same procedure as defined in Example 1 was conducted except that 68.4 g of Mg(NO$_3$)$_2$·6H$_2$O, 50.0 g of Al(NO$_3$)$_3$·9H$_2$O, 9.0 g of Ni(NO$_3$)$_2$·6H$_2$O, 33 mL of a NaOH solution (concentration: 14 mol/L) and 21.2 g of Na$_2$CO$_3$ were used as raw compounds, and the reaction therebetween was conducted at 75°C for 8 hours, followed by heat-treating the obtained reaction product at 1000°C for 1 hour.
As a result, it was confirmed that the obtained catalyst carrier had a BET specific surface area of 40 m$^2$/g, an average pore diameter of 263 Å and a pore volume of 0.30 cm$^3$/g.
The resultant product was compression-molded into a cylindrical shape having a diameter of 2 mm and a height of 2.5 mm, and then heat-treated at 100°C for 14 hours. As a result of analyzing the cylindrical molded product, it was confirmed that the content of Mg in cylindrical molded product was 29.2% by weight. Further, the thus obtained product was subjected to reducing treatment at 840°C for 3. hours in a gas containing 5% by volume of hydrogen and nitrogen to precipitate and immobilize metallic nickel on the carrier, thereby obtaining a catalyst. As a result of analyzing the obtained catalyst, it was confirmed that the amount of the metallic nickel supported on the carrier was 8.1% by weight, and the size of the metallic nickel supported on the carrier was 6 nm. Further, it was confirmed that the magnesium content in the resultant porous carrier was 29.2% by weight and the aluminum content was 16.2% by weight (molar ratio: Mg:Al = 2.0:1).
6 cc (5.46 g) of the thus obtained catalyst was filled in a flow reaction apparatus, and a city gas 13A having a total sulfur content of 1 ppm was flowed therethrough at a gas hourly space velocity (GHSV) of 1000 h$^{-1}$ and a temperature of 650°C, while feeding steam under the condition of a ratio of steam to carbon (S/C) of 3, to evaluate a steam reforming activity of the catalyst. As a result, it was confirmed that even after the reaction was conducted for 100 hours, only a C$_1$ component of carbon oxide and carbon dioxide, and hydrogen were produced as reaction products, and no gas components containing C$_2$ or more hydrocarbons were detected. Further, it was confirmed that conversion of the city gas 13A after conducting the reaction for 300 hours was lower only by about 4% than conversion thereof upon initiation of the reaction.
Meanwhile, the conversion of the city gas 13A was determined from the following formula:

```
Conversion of city gas 13A (%) =

[1 - (total number of hydrocarbon molecules in produced

gas)/(total number of hydrocarbon molecules in city gas

13A supplied)] x 100
```

Example 7:

The same procedure as defined in Example 1 was conducted except that 76.9 g of Mg(NO$_3$)$_2$·6H$_2$O, 37.5 g of Al(NO$_3$)$_3$·9H$_2$O, 60.8 mL of a NaOH solution (concentration: 14 mol/L) and 10.6 g of Na$_2$CO$_3$ were used as raw compounds, and the reaction therebetween was conducted at 80°C for 12 hours, followed by heat-treating the reaction product at 1000°C for 1.5 hours.
As a result, it was confirmed that the obtained catalyst carrier had a BET specific surface area of 38 m$^2$/g, an average pore diameter of 269 Å and a pore volume of 0.32 cm$^3$/g.
The resultant carrier component was mixed with granular θ-alumina in an amount corresponding to 0.1% by weight based on the weight of the carrier. The resultant mixture was molded into a spherical shape having a diameter of 3 mm, and then heat-treated at 1000°C for 12 hours. As a result of analyzing the spherical molded product, it was confirmed that the content of Mg in the spherical molded product was 38.6% by weight. Further, the thus obtained spherical molded product was spray-coated with a silver nitrate solution, and then dried to obtain a catalyst precursor containing metallic silver as a catalyst component in an amount of 18% by weight. The obtained catalyst precursor was dried and then heat-treated at 450°C for 2 hours, and further subjected to hydrogen reducing treatment at 700°C for 1 hour in a gas containing 5% by volume of hydrogen and nitrogen, thereby obtaining a catalyst. As a result of analyzing the obtained catalyst, it was confirmed that the amount of the metallic silver supported on the carrier was 18.0% by weight, and the size of the metallic silver supported on the carrier was 12 nm. Further, it was confirmed that the magnesium content in the resultant porous carrier was 30.8% by weight and the aluminum content was 11.4% by weight (molar ratio: Mg:Al = 3.0:1).

6 cc (7.13 g) of the thus obtained catalyst was filled in a flow reaction apparatus, and a city gas 13A having a total sulfur content of 3.5 ppm was flowed therethrough at a gas hourly space velocity (GHSV) of 830 $h^{-1}$ and a temperature of 650°C, while feeding steam under the condition of a ratio of steam to carbon (S/C) of 2.6, to evaluate a steam reforming activity of the catalyst. As a result, it was confirmed that even after the reaction was conducted for 45 hours, only a $C_1$ component of carbon oxide and carbon dioxide, and hydrogen were produced as reaction products, and no gas components containing $C_2$ or more hydrocarbons were detected. Further, it was confirmed that conversion of the city gas 13A after conducting the reaction for 45 hours was lower only by about 2.5% than conversion thereof upon initiation of the reaction.

Meanwhile, the conversion of the city gas 13A was determined from the following formula:

$$\text{Conversion of city gas 13A (\%)} =$$

$$[1 - (\text{total number of hydrocarbon molecules in produced}$$

$$\text{gas})/(\text{total number of hydrocarbon molecules in city}$$

$$\text{gas supplied})] \times 100$$

Comparative Example 1:

The same procedure as defined in Example 1 was conducted except that 51.3 g of $Mg(NO_3)_2 \cdot 6H_2O$, 75.0 g of $Al(NO_3)_3 \cdot 9H_2O$, 62 mL of a NaOH solution (concentration: 14 mol/L) and 25.4 g of $Na_2CO_3$ were used as raw compounds, and the reaction therebetween was conducted at 65°C for 4 hours, followed by heat-treating the obtained reaction product at 1000°C for 1 hour.

As a result, it was confirmed that the obtained catalyst carrier had a BET specific surface area of 149 $m^2/g$, an average pore diameter of 316 Å and a pore volume of 2.45 $cm^3/g$.

The resultant carrier component was mixed with θ-alumina in an amount corresponding to 10.3% by weight based on the weight of the carrier. The resultant mixture was molded into a spherical shape having a diameter of 3 mm, and the obtained spherical molded product was heat-treated at 600°C for 10 hours. As a result of analyzing the heat-treated spherical molded product, it was confirmed that the content of Mg in the spherical molded product was 15.5% by weight. The obtained spherical molded product was impregnated with nickel nitrate such that metallic nickel as a catalyst component was contained therein in an amount of 18.0% by weight. After drying, the obtained product was heat-treated at 770°C for 1 hour. Further, the thus obtained product was subjected to reducing treatment at 790°C for 2 hours in a gas containing 5% by volume of hydrogen and nitrogen to precipitate and immobilize the metallic nickel on the carrier, thereby obtaining a catalyst. As a result of analyzing the obtained catalyst, it was confirmed that the amount of the metallic nickel supported on the carrier was 18.0% by weight, and the size of the metallic nickel supported on the carrier was 12 nm. Further, it was confirmed that the magnesium content in the resultant porous carrier was 12.6% by weight and the aluminum content was 18.1% by weight (molar ratio: Mg:Al = 0.8:1).

3 cc (3.30 g) of the thus obtained catalyst was filled in a flow reaction apparatus, and a city gas 13A having a total sulfur content of 5 ppm was flowed therethrough at a gas hourly space velocity (GHSV) of 500 $h^{-1}$ and a temperature of 430°C, while feeding steam under the condition of a ratio of steam to carbon (S/C) of 2, to evaluate a steam reforming activity of the catalyst. As a result, it was confirmed that although only a $C_1$ component of carbon oxide and carbon dioxide, and hydrogen were produced as reaction products and no gas components containing $C_2$ or more hydrocarbons were detected at an initial stage of the reaction, after conducting the reaction for 11 hours, the reaction apparatus suffered from clogging. More specifically, it was confirmed that accelerated coking of the catalyst was caused by bonding between sulfur and nickel owing to an insufficient sulfur-poisoning resistance of the catalyst, resulting in occurrence of clogging in the reaction apparatus.

Comparative Example 2:

A slurry containing 8.1 g of MgO and 20.4 g of $\gamma$-$Al_2O_3$ in an amount of 10% by weight as a total solid content, was pulverized together with glass beads by a paint shaker for 24 hours. The resultant slurry was filtered to separate the solid component therefrom, and the thus separated solid component was dried, pulverized and then heat-treated at 1200°C for 1.5 hours.

As a result, it was confirmed that the obtained catalyst carrier had a BET specific surface area of 7 $m^2$/g, an average pore diameter of 435 Å and a pore volume of 0.05 $cm^3$/g.

The resultant carrier component was mixed with titania in an amount corresponding to 20.4% by weight based on the weight of the carrier. The resultant mixture was molded into a disk shape having a diameter of 10 mm, and the obtained disk-shaped molded product was pulverized and classified to obtain pellets having a size of 1 to 1.5 mm. As a result of analyzing the pellets, it was confirmed that the content of Mg in the pellets was 14.2% by weight. The thus obtained pellets were heat-treated at 500°C for 2 hours, and further immersed in a rhodium nitrate solution and then dried to produce a catalyst precursor containing metallic rhodium as a catalyst component in an amount of 1.5% by weight. The resultant catalyst precursor was dried and then heat-treated at 450°C for 1 hour, thereby obtaining a catalyst. Further, the thus obtained catalyst was subjected to hydrogen reducing treatment at 500°C for 1 hour in a gas containing 5% by volume of hydrogen and nitrogen. As a result of analyzing the obtained catalyst, it was confirmed that the amount of the metallic rhodium supported on the carrier was 1.50% by weight, and the size of the metallic rhodium supported on the carrier was 7 nm. Further, it was confirmed that the magnesium content in the resultant porous carrier was 9.9% by weight and the aluminum content was 14.9% by weight (molar ratio: Mg:Al = 0.7:1).

3 cc (4.01 g) of the thus obtained catalyst was filled in a flow reaction apparatus, and gasified isooctane as a raw material having a total sulfur content of 10 ppm was flowed therethrough at a gas hourly space velocity (GHSV) of 20000 $h^{-1}$ and a temperature of 550°C, while feeding steam under the condition of a ratio of steam to carbon (S/C) of 2.4, to evaluate a steam reforming activity of the catalyst. As a result, it was confirmed that although only a $C_1$ component of carbon oxide and carbon dioxide, and hydrogen were produced as reaction products and no gas components containing $C_2$ or more hydrocarbons were detected at an initial stage of the reaction, after conducting the reaction for 2 hours, the reaction apparatus suffered from clogging. More specifically, it was confirmed that coking of the catalyst was caused owing to an insufficient sulfur-poisoning resistance thereof, resulting in occurrence of clogging in the reaction apparatus.

**Claims**

1. A porous carrier for steam-reforming catalysts, comprising a composite oxide containing at least aluminum and magnesium, and having a BET specific surface area of 10 to 300 $m^2$/g, an average pore diameter of not more than 30 nm (300 Å) and a pore volume of not less than 0.1 $cm^3$/g.

2. A porous carrier for steam-reforming catalysts according to claim 1, wherein the content of the magnesium is 22 to 60% by weight, calculated as Mg, based on the weight of the porous carrier.

3. A porous carrier for steam-reforming catalysts according to claim 1 or 2, wherein the porous carrier is in the form of a beads-like molded product or a sheet-like molded product.

4. A porous carrier for steam-reforming catalysts according to claim 3, wherein the porous carrier has a BET specific surface area of 10 to 100 $m^2$/g and an average pore diameter of not more than 25 nm (250 Å).

5. A porous carrier for steam-reforming catalysts according to any one of the preceding claims, wherein the porous carrier is in the form of a mixture of the composite oxide with an oxide, a hydroxide, a carbonate or an oxide hydroxide of at least one element selected from rare earth elements, elements of Group Ia and elements of Group IIa, and the content of magnesium in the mixture is 20 to 50% by weight, calculated as Mg.

6. A porous carrier for steam-reforming catalysts according to claim 5, wherein:

(a) the element selected from rare earth elements, elements of Group Ia and elements of Group IIa is silicon, zirconium, cerium, titanium, aluminum, yttrium and scandium; or
(b) the oxide, the hydroxide, the carbonate or the oxide hydroxide is at least one compound selected from silica, zirconia, ceria, titania, water glass, yttria, scandia, potassium carbonate, calcia, lanthanum oxide, neodymium oxide, cerium oxide, rubidium hydroxide, barium carbonate, boehmite, $\alpha$-alumina, $\theta$-alumina and $\gamma$-alumina.

7.  A steam-reforming catalyst comprising the porous carrier as defined in any one of the preceding claims and at least one active metal which is selected from Ru, Rh, Ir, Pt, Pd, Co, Ni, Fe and Ag, which is supported on the porous carrier and which has an average particle diameter of 1 to 15 nm.

8.  A steam-reforming catalyst according to claim 7, wherein the amount of the active metal supported on the porous carrier is 0.1 to 40% by weight based on the weight of the catalyst.

9.  A process for producing a reactive mixed gas containing a $C_1$ component and hydrogen as main components, comprising contacting a gaseous or liquid hydrocarbon raw material with the steam-reforming catalyst as defined in claim 7 or 8 to decompose the hydrocarbon raw material.

10. A process according to claim 9, wherein:

    (a) the gaseous hydrocarbon raw material and steam are contacted with the steam-reforming catalyst at a gas hourly space velocity (GHSV) of 100 to 1,000,000 $h^{-1}$ and a reaction temperature of 300 to 800°C under the condition of a ratio of steam to carbon (S/C) of 1.0 to 6.0:1; or
    (b) the liquid hydrocarbon raw material is contacted with the steam-reforming catalyst at a liquid hourly space velocity (LHSV) of not more than 5 $h^{-1}$ and a reaction temperature of 300 to 800°C under the condition of a ratio of steam to carbon (S/C) of 1.0 to 6.0:1.

European Patent Office

**EUROPEAN SEARCH REPORT**

Application Number

EP 07 25 0126

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 285 692 A (HIROSHIMA IND PROMOTION ORGANI [JP]; TODA KOGYO CORP [JP]; MITSUBISHI) 26 February 2003 (2003-02-26) * paragraphs [0035], [0074]; claims 1,6-8,10; examples 1-8 * ----- | 1-10 | INV. B01J21/04 B01J21/10 B01J23/58 B01J23/63 B01J23/78 |
| X | EP 1 449 581 A (TODA KOGYO CORP [JP]) 25 August 2004 (2004-08-25) * claims 1,2,9; example 9 * ----- | 1,2,4, 7-10 | B01J23/83 C01B3/40 |
| X | SHISHIDO T ET AL: "CO2 REFORMING OF CH4 OVER NI/MG-AL OXIDE CATALYSTS PREPARED BY SOLID PHASE CRYSTALLIZATION METHOD FROM MG-AL HYDROTALCITE-LIKE PRECURSORS" CATALYSIS LETTERS, SPRINGER, DORDRECHT, NL, vol. 73, no. 1, April 2001 (2001-04), pages 21-26, XP009002210 ISSN: 1011-372X * page 22, column 1; table 2 * ----- | 1 | |
| X | US 2005/234137 A1 (ESPINOZA RAFAEL L [US] ET AL) 20 October 2005 (2005-10-20) * table 1 * ----- | 1,4 | TECHNICAL FIELDS SEARCHED (IPC) B01J C01B |
| X | MORIOKA H ET AL: "Partial oxidation of methane to synthesis gas over supported Ni catalysts prepared from Ni-Ca/Al-layered double hydroxide" APPLIED CATALYSIS A: GENERAL, ELSEVIER SCIENCE, AMSTERDAM, NL, vol. 215, no. 1-2, 13 July 2001 (2001-07-13), pages 11-19, XP004246304 ISSN: 0926-860X * page 12, column 2 - page 17, column 2; table 2 * ----- | 1 | |

-/--

The present search report has been drawn up for all claims

| Place of search | Date of completion of the search | Examiner |
|---|---|---|
| The Hague | 31 May 2007 | Mattheis, Chris |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**European Patent Office**

**EUROPEAN SEARCH REPORT**

Application Number

EP 07 25 0126

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/138317 A1 (XIE SHUIBO [US] ET AL) 15 July 2004 (2004-07-15) * the whole document * ----- | 1-10 | |
| A | US 5 653 774 A (BHATTACHARYYA ALAKANANDA [US] ET AL) 5 August 1997 (1997-08-05) * the whole document * ----- | 1-10 | |
| A | US 2003/180215 A1 (NIU TIANYAN [US] ET AL) 25 September 2003 (2003-09-25) * the whole document * ----- | 1-10 | |

TECHNICAL FIELDS SEARCHED (IPC)

The present search report has been drawn up for all claims

| Place of search | Date of completion of the search | Examiner |
|---|---|---|
| The Hague | 31 May 2007 | Mattheis, Chris |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 25 0126

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2007

| Patent document cited in search report | | Publication date | Patent family member(s) | | Publication date |
|---|---|---|---|---|---|
| EP 1285692 | A | 26-02-2003 | JP<br>US<br>US | 2003135967 A<br>2003047488 A1<br>2007021299 A1 | 13-05-2003<br>13-03-2003<br>25-01-2007 |
| EP 1449581 | A | 25-08-2004 | JP<br>US | 2004255245 A<br>2004209773 A1 | 16-09-2004<br>21-10-2004 |
| US 2005234137 | A1 | 20-10-2005 | NONE | | |
| US 2004138317 | A1 | 15-07-2004 | NONE | | |
| US 5653774 | A | 05-08-1997 | US | 5767040 A | 16-06-1998 |
| US 2003180215 | A1 | 25-09-2003 | NONE | | |

EPO FORM P0459

For more details about this annex : see Official Journal of the European Patent Office, No. 12/82

## REFERENCES CITED IN THE DESCRIPTION

### Patent documents cited in the description

- JP 9173842 A
- JP 2001340759 A
- JP 2004000900 A
- JP 2004082034 A
- JP 55139836 A
- JP 2003225566 A